(19) Europäisches Patentamt
European Patent Office
Office européen des brevets

(11) Veröffentlichungsnummer: **0 000 796**
**A1**

(12) **EUROPÄISCHE PATENTANMELDUNG**

(21) Anmeldenummer: **78200111.9**

(51) Int. Cl.²: **C 08 L 63/00**, C 09 D 3/58

(22) Anmeldetag: **18.07.78**

(30) Priorität: **22.07.77 US 818184**

(43) Veröffentlichungstag der Anmeldung:
**21.02.79 Patentblatt 79/4**

(84) Benannte Vertragsstaaten:
**BE DE FR NL**

(71) Anmelder: **METALLGESELLSCHAFT AG**
**Reuterweg 14**
**D-6000 Frankfurt/M.1(DE)**

(84) Benannte Vertragsstaaten:
**DE NL**

(71) Anmelder: **Société Continentale Parker**
**51, Rue Pierre**
**F-92111 Clichy(FR)**

(84) Benannte Vertragsstaaten:
**BE FR**

(72) erfinder: **Howell, Jr.,John K.**
**5181 Burnside Road**
**North Branch Michigan 48461(US)**

(74) Vertreter: **Fischer, Ernst, Dr.**
**Reuterweg 14**
**D-6000 Frankfurt am Main(DE)**

(54) **Überzugsmittel für Metalloberflächen und Verfahren zur Beschichtung.**

(57) Die wäßrigen Zusammensetzungen werden angewendet, um einen schützenden Überzug zu bilden auf Metalloberflächen, insbesondere Stahl- oder Zinnoberflächen, und sind besonders nützlich zur Beschichtung von Schwarzblech- oder Weißblechdosen. Die Überzugsmittel enthalten, in Form einer wäßrigen Emulsion, ein Epoxidharz, ein alkyliertes Melamin-Formaldehydharz, einen sauren Katalysator, ein Blockcopolymers von Äthylenoxid und Propylenoxid sowie Wasser. Das Mittel wird aufgebracht auf eine reine Metalloberfläche durch eine beliebige übliche Technik und im Ofen gehärtet, um einen schützenden, lackaufnahmefähigen Überzug zu ergeben.

EP 0 000 796 A1

A 6509

17. Juli 1978
DrBr/LWü

## Überzugsmittel für Metalloberflächen und Verfahren zur Beschichtung

Die Erfindung bezieht sich auf das Gebiet des Aufbringens eines organischen Überzuges auf eine Metalloberfläche und insbesondere auf eine organische Überzugszusammensetzung auf wäßriger Grundlage, um der Metalloberfläche Korrosionsbeständigkeit und Lackaufnahmefähigkeit zu verleihen. Ganz besonders ist die Erfindung darauf gerichtet, eine Zusammensetzung und Arbeitsweise zur Verfügung zu stellen für das Aufbringen eines organischen Überzuges auf Oberflächen von Schwarzblech- oder Weißblechdosen.

Gegenwärtige und zukünftige Märkte für Metalldosen beruhen primär auf Aluminium, verzinntem Stahl und Schwarzblech als Materialien. Zu den Methoden der Dosenherstellung gehören Dreiteile-Verfahren, wobei ein getrennter Deckel und Boden mit einer eine Naht aufweisenden Mantelstruktur verbunden werden, um die vollständige Dose zu bilden, sowie Zweiteile-Verfahren, bei denen eine einheitliche Seitenwand- und Bodenstruktur durch Kaltumformung aus einem

Metallblech gebildet und daran der Deckel angebracht wird, um die fertige Dose zu bilden. Während die besonderen Überzugserfordernisse je nach Herstellungsmethode und/oder -material variieren, ist es allgemein notwendig, einen relativ unporösen organischen Überzug auf die Metalloberfläche aufzubringen, um 1) der Metalloberfläche ausreichende Korrosionsbeständigkeit zu verleihen, 2) eine geeignete Grundlage für dekorative Anstriche und Überlackierungen zu bilden und 3) eine geeignete Trennschicht zwischen der Metalloberfläche und dem Nahrungsmittel, Getränk oder anderen Füllgütern, für die die Dose bestimmt ist, zu schaffen.

Die Berücksichtigung von Umweltfragen hat eine wesentliche Bedeutung für die Entwicklung neuer Techniken und Mittel für die Dosenherstellung. Insbesondere sind herkömmliche Verfahren, die Chrom-Chemikalien einsetzen und die große Mengen an flüchtigen organischen Lösungsmitteln verwenden, aus Umweltgründen nicht einwandfrei. Es ist deshalb erwünscht, Mittel und Techniken zu entwickeln, die Dosen von annehmbarer Qualität ergeben, ohne daß damit Umweltschwierigkeiten, die mit der Verwendung von Chrom und/oder organischen Lösungsmitteln verbunden sind, auftreten.

Die Aufbringung von Überzügen auf Zweiteil-Dosen ist besonders kritisch auf Grund der Tatsache, daß die Überzüge auf die einheitliche Boden- und Seitenwandstruktur, die den Zugang schwieriger macht, aufgebracht werden müssen. Beim Zweiteil-Dosen-Herstellungsverfahren für verzinnte (Weißblech-)Dosen werden die folgenden Stufen für eine Getränkedose durchgeführt:

1) Formung des einteiligen Mantels und Bodens;
2) Reinigen mit einem alkalischen, sechswertiges Chrom enthaltenden Reiniger;
3) Spülen;

4) günstigerweise Anwendung eines sogenannten „Wash coat"-Überzuges;
5) Trocknen;
6) Auftrag eines dekorativen Außenlackes;
7) Einbrennen;
8) Auftrag eines sanitären Innenlackes;
9) Einbrennen.

Im Falle von Schwarzblechdosen würde der Gang ähnlich sein mit einer günstigen Aufbringung eines Konversionsüberzuges und einer Spülung im Anschluß an die Spülstufe 3). Darüber hinaus ist es oft notwendig, zwei Schichten von sanitärem Lack aufzubringen, um eine zu hohe Porosität des Oberflächenüberzuges zu vermeiden.

Die übliche Technik zum Auftrag des sanitären Innenlackes auf die Dose ist die mittels einer Airless-Spritzvorrichtung. Diese macht es jedoch erforderlich, daß die Dosen individuell gespritzt werden, um einen gleichmäßigen Überzug zu erhalten. Demgegenüber werden die Dosen während der Reinigungs- und Spülstufen nicht getrennt für eine individuelle Behandlung. Es ist daher erwünscht, sowohl die Anwendung des Grundüberzuges außen als auch einer sanitären Innenlackschicht durch Massenbehandlung von Dosen mit einem sogenannten „Wash coat"-Überzug in einer Vorrichtung vom Dosenwäscher-Typ durchführen zu können, anstatt jede der Dosen individuell zu behandeln.

In den vergangenen Jahren sind eine Reihe von Überzügen aus wäßriger Basis entwickelt worden (vgl. beispielsweise US-PSS 3 908 049, 3 922 451, 3 968 311 und 3 996 182).

Es wurde nun gefunden, daß eine wäßrige Zusammensetzung, die

(a) ein Epoxidharz mit einem durchschnittlichen Molekulargewicht von etwa 900 bis 2 900 und etwa 2.7 bis 11.6 Hydroxyläquivalenten pro Mol,

(b) ein alkyliertes Melamin-Formaldehydharz in einem Gewichtsverhältnis von Epoxidharz : Melamin-Formaldehydharz von (2 bis 20) : 1,

(c) einen sauren Katalysator in einer ausreichenden Menge, um Vernetzung des Epoxidharzes und Melamin-Formaldehydharzes zu bewirken, und

(d) ein Blockcopolymeres der allgemeinen Formel

$$HO(CH_2CH_2O)_a(\overset{\displaystyle CH_3}{\overset{|}{C}}HCH_2O)_b(CH_2CH_2O)_cH$$

mit einem hydrophil-lipophilen Verhältnis (HLB) über 22 und einem Molekulargewicht im Bereich von etwa 5 000 bis 14 000 in einer Menge von etwa 2 bis 12 Gew.-% der Summe von Epoxid- und Melamin-Formaldehydharz

enthält, geeignet ist zur Bildung einer wäßrigen Emulsion und zur Behandlung einer Stahl- oder Zinnoberfläche, um darauf einen schützenden Überzug zu bilden, wenn sie verwendet wird bei einer Konzentration der Komponenten (a) bis (d) von 5 bis 85 Gew.-%.

Abgesehen von Wasser sind die vier notwendigen Bestandteile der erfindungsgemäßen Zusammensetzung ein Epoxidharz, ein alkyliertes Melamin-Formaldehydharz, ein Säurekatalysator und ein Blockcopolymeres der angegebenen Formel. Die obigen Komponenten bilden eine stabile wäßrige Phase bei einer Arbeitsbad-Gesamtkonzentration im Bereich von etwa 5 bis 40 Gew.-%. Ein Konzentrat der Zusammensetzung kann in einer Gesamtkonzentration von bis zu 85 Gew.-% hergestellt werden. In hochkonzentrierten Konzentrat-Zusammensetzungen ist es manchmal erwünscht, eine sehr geringe Menge eines Ammoniumsalzes von Phosphorsäure einzufügen, um die Stabilität zu verbessern, z.B. etwa 0.04 bis 0.2 Gew.-%.

Die Epoxidharz-Komponente des erfindungsgemäßen Mittels hat ein durchschnittliches Molekulargewicht von etwa 900 bis 2900 und etwa 2.7 bis 11.6 Hydroxylgruppen pro Mol. Das bevorzugte Epoxidharz hat ein durchschnittliches Molekulargewicht von etwa 900 und ein Hydroxyläquivalent von etwa 2.7 bis 4.2 Äquivalent pro Mol. Geeignete Epoxidharze sind im Handel erhältlich und beispielsweise die Produkte der Epon 1001 bis 1007-Serien von Harzen (der Shell Chemical Co.).

Als alkyliertes Melamin-Formaldehydharz kann ein beliebiges solches Harz, das als Amino-Vernetzungsmittel bekannt ist, verwendet werden. Solche Produkte haben im allgemeinen ein Äquivalentgewicht im Bereich von 130 bis 240 entsprechend den Hersteller-Spezifikationen. Das Melamin-Formaldehydharz wird mit einem oder mehreren Alkoholen mit 1 bis 4 C-Atomen alkyliert, um ein entsprechendes alkyliertes Melamin-Formaldehydharz zu ergeben. Die Konzentration des alkylierten Melamin-Formaldehydharzes in der Zusammensetzung wird so gewählt, daß sich ein Gewichtsverhältnis von Epoxidharz : Melamin-Formaldehydharz von 2:1 bis 20:1 ergibt. Geeignete

alkylierte Melamin-Formaldehydharze sind im Handel erhältlich und beispielsweise die Produkte Cymel 303, Cymel 1130 und Cymel 1156 (der American Cyanamid).

Das Blockcopolymere, welches der dritte notwendige Bestandteil der Zusammensetzung ist, ist ein Blockcopolymeres, das zwei Polyoxyäthylensegmente, getrennt durch ein Polyoxypropylensegment, enthält. Das Blockcopolymere hat somit die folgende allgemeine Formel:

$$HO(CH_2CH_2O)_a(\underset{\displaystyle |}{\overset{CH_3}{}}\!\!CHCH_2O)_b(CH_2CH_2O)_cH$$

Die Werte für a, b und c sind so gewählt, daß sich ein Molekulargewicht im Bereich von etwa 5 000 bis 14 000 ergibt und daß sich ein hydrophil-lipophiles Verhältnis (HLB-Zahl) von über 22 ergibt. Die Methode zur Bestimmung von HLB-Werten ist bekannt und z.B. beschrieben in J. Amer. Oil Chem. Soc. 41, 169 (1964); J. Soc. Cos. Chem. 1, 311-26 (1949) und J. Soc. Cos. Chem. 5, 245-55 (1954). Geeignete Blockcopolymere sind im Handel erhältlich und beispielsweise die Produkte der Pluronic-Serien (der BASF Wyandotte), insbesondere die Produkte Pluronic F 38, F 68 und F 108. Das bevorzugte Blockcopolymere ist das Produkt Pluronic F 68, welches eine HLB-Zahl von etwa 29 und einen Wert von b = 30 und von a + c = 150 (in der obigen Formel) hat. Die Konzentration an Blockcopolymerem in der Zusammensetzung soll 2 bis 12 Gew.-% der Gesamtkonzentration von verwendetem Epoxid- und Melamin-Formaldehydharz betragen.

Der vierte notwendige Bestandteil der Zusammensetzung ist ein Säurekatalysator, der in einer zur Bewirkung der Vernetzung des Epoxid- und Melamin-Formaldehydharzes bei der Wärmehärtung ausreichenden Menge vorhanden ist. Der Katalysator kann ein beliebiger saurer Katalysator sein, von dem bekannt ist, daß er die Härtung von Aminoharzen mit

Polymeren, die Hydroxyl-, Carboxyl- oder Amin-Funktionalitäten enthalten, beschleunigt, wie z.B. Mineralsäuren, p-Toluolsulfonsäure, Dodecylbenzolsulfonsäure, Phosphorsäure, Alkylphosphorsäure, Maleinsäure, Trimellitsäure, Phthalsäure, Acrylsäure enthaltende Polymere. Normalerweise liegt die Konzentration an solchen Katalysatoren im Bereich von 0.2 bis 1.5 Gew.-% der anderen nichtflüchtigen Bestandteile der Zusammensetzung. Höhere Prozentanteile können jedoch verwendet werden im Fall von katalytischen Mitteln sehr hohen Molekulargewichts. Ein besonders brauchbarer Katalysator ist ein Ammoniumsalz eines Alkyl- oder Alkylarylpolyoxyäthylensulfats. Die Formel für das Anion einer solchen Verbindung ist

$$R-O(CH_2CH_2O)_mSO_3^-$$

wobei R eine Alkyl- oder Alkylarylgruppe von mindestens 10 C-Atomen, die einen gesättigten Alkylanteil enthält, bedeutet und m im Bereich von etwa 4 bis 30 ist. Vorzugsweise ist R eine Phenylgruppe, die ein Propylen-Trimeres enthält. Geeignete Produkte dieser Art sind im Handel erhältlich und beispielsweise die Produkte Alipal EP 110, EP 115 und EP 120 (der GAF Corp.). Die Verwendung solcher Verbindungen hat einen zweiten Vorteil darin, daß sie auch einwirken, um die Emulgierung der wäßrigen Zusammensetzung zu unterstützen.

Das Wasser für die Herstellung des Mittels kann Leitungswasser sein; entionisiertes oder destilliertes Wasser wird jedoch bevorzugt, weil das Vorhandensein von unbekannten und unquantifizierten Ionen, die die Überzugsqualität beeinflussen können, dadurch ausgeschaltet wird.

Zusätzlich zu den notwendigen Bestandteilen des Mittels kann eine Reihe von anderen Hilfsmitteln verwendet werden, beispielsweise Mittel zur Einstellung der Viskosität und Fließcharakteristiken, wie Hydroxymethylcellulose, Hydroxyäthylcellulose, wasserlösliche Glykoläther und Alkohole; Benzoesäure zur Verhinderung des Anrostens der Metalloberfläche beim Trocknen; Ammoniumsalze von Phosphorsäuren zur Verleihung von Phasenstabilität und/oder pH-Einstellung; übliche pH-Einstellungsmittel, wie die gewöhnlich verwendeten organischen und anorganischen Säuren, z.B. Tanninsäure, Zitronensäure und Weinsäure; zusätzliche Emulgatoren und Gleitmittel (Oberflächenschmiermittel); Entschäumungsmittel und organische Lösungsmittel, die die Emulgierung unterstützen, wie Cyclohexanon, Toluol, Methyläthylketon, Methylisobutylketon, Methylisoamylketon und dergleichen.

Während die bevorzugte Aufbringungsmethode im Falle der Behandlung von Metalldosen das Fluten ist, können andere übliche Techniken, wie Spritzen, Tauchen und Walzenauftrag, wo sie für die zu behandelnden Oberflächen geeignet sind, auch angewendet werden.

Die Härtung wird typisch bei Temperaturen über 149 °C durchgeführt. Bei 232 °C kann die Härtung in etwa 2,5 Min. bewirkt werden.

Im Falle der Behandlung von Schwarzblechdosen wurde ein unerwarteter Vorteil gefunden zusätzlich zu den Verbesserungen

in der Korrosionsbeständigkeit und Haftfestigkeit. Speziell Schwarzblechdosen bewegen sich nicht so leicht durch eine Dosenfertigungslinie wie dies Weißblechdosen tun, da die Zinnoberfläche dazu neigt, die Reibung zwischen der Dosenoberfläche und der Behandlungsvorrichtung zu reduzieren. Schwarzblechdosen neigen dazu, einer übermäßigen Reibung zu unterliegen, wenn sie sich durch die Behandlungsanlage bewegen, und verursachen daher eine merkliche Zahl von Linienstörungen. Diese Schwierigkeit wird durch das erfindungsgemäße Mittel behoben, da der Schwarzblechoberfläche zusätzliche Lubrizität vermittelt wird, wodurch ein geschmeidigerer Gang der Dosenherstellungslinie ermöglicht wird.

In den folgenden Beispielen wird auf den Haftungstest Bezug genommen. Bei diesem Test wird das mit einem organischen Überzug beschichtete Teststück (Metalldose, -ausschnitt oder -blech) in eine siedende 1 %ige Detergenslösung (Joy-Lösung) für 30 Min. eingetaucht. Nach dem Herausnehmen aus der Lösung wird das Teststück gut mit fließendem Leitungswasser gespült, bis zum Metall geritzt in einem Kreuzschnittgerät und mit Druckluft trockengeblasen. Dann wird der Kreuzschnittbereich fest mit einem Klebeband versehen. Das Klebeband wird rasch von der Metalloberfläche abgezogen und der Kreuzschnittbereich besichtigt. Das Teststück wird dann bewertet und in drei Kategorien eingestuft: Kein Lack abgezogen; geringer Lackabzug (noch annehmbar) oder größerer Lackabzug (nicht annehmbar). In den Beispielen werden manchmal vergleichende numerische Bewertungen verwendet. Die Bewertung „10" bedeutet keinen Lackabzug. Bewertungen von „6" bis „9" entsprechen geringem, aber noch annehmbarem Lackabzug (weniger als 10 % entfernt) und von „0" bis „5" entsprechen größerem Lackabzug (über 10 % entfernt).

Beispiel 1

Eine Reihe von Emulsionen wurde entsprechend den Angaben in Tabelle I A hergestellt:

Tabelle I A

| Komponenten Nr. | Konzentration Gew.-% 1 A | 1 B | 1 C | 1 D | 1 E | 1 F |
|---|---|---|---|---|---|---|
| Epoxidharzlösung 1) (75 Gew.-%) | 21,50 | 21.50 | 21.50 | 19.83 | 19.83 | 19.83 |
| Monomeres methyliertes Melamin-Formaldehydharz 2) | 2.48 | 2.48 | 2.48 | 3.73 | 3.73 | 3.73 |
| Blockpolymeres 3) | 1.20 | 2.40 | 3.60 | 1.18 | 2.36 | 3.55 |
| Saurer Katalysator 4) (30 Gew.-%) | 3.60 | 2.40 | 1.20 | 3.55 | 2.36 | 1.18 |
| Monoammoniumphosphat | 0.04 | 0.04 | 0.04 | 0.04 | 0.04 | 0.04 |
| Entionisiertes Wasser | Rest | Rest | Rest | Rest | Rest | Rest |

1) Epoxidharz (Mol.-Gew. = 900; Hydroxylgruppen pro Mol = 2.7) (Handelsprodukt Epon 1001 der Shell Chemical Co.) als 75 Gew.-%ige Lösung in Cyclohexanon

2) Äquivalentgewicht im Bereich von 130 - 190 (Handelsprodukt Cymel 303 der American Cyanamid)

3) Enthaltend ein Oxypropylensegment und 2 Oxyäthylensegmente mit etwa 30 Mol Oxypropylen und 150 Mol Oxyäthylen pro Molekül und mit einem Molekulargewicht von etwa 8350 und einer HLB-Zahl von etwa 29 (Handelsprodukt Pluronic F 68 der BASF Wyandotte)

4) Ammoniumsalz von sulfatiertem Alkylphenoxypoly(äthylenoxy)-äthanol, enthaltend eine Nonylphenol-kondensierte Äthylenoxidkette mit 30 Äthylenoxydgruppen (30 Gew.-% in Wasser) (Handelsprodukt Alipal EP-120 der GAF Corp.)

Proben von Schwarzblech (etwa 5 cm x 10 cm) wurden aus den Seitenwänden von vorgereinigten, gezogenen und geglätteten (drawn and ironed) Dosen ausgeschnitten. Paare der Ausschnitte wurden durch die vorstehend angegebenen Emulsionen behandelt. Die genaue Behandlungsfolge war:

45 Sek. Spritzen mit schwachalkalischem Reiniger (Reiniger A, siehe nachstehend)
15 Sek. Spritzspülung Warmwasser
15 Sek. Spritzspülung entionisiertes Wasser
15 Sek. Tauchbehandlung Emulsion
5 Min. Einbrennen bei 204 °C im Ofen mit zirkulierender Luft

In gleicher Weise wurden Proben aus Weißblech (etwa 5 cm x 10 cm) aus gezogenen und geglätteten Weißblechdosen ausgeschnitten und Paare hiervon durch die gleichen Emulsionen behandelt, wobei einer von drei Reinigern verwendet wurde:

Reiniger A: ein schwach-ätzender, niedrig-alkalischer (pH 10) chromfreier Reiniger
Reiniger B: ein schwachalkalischer (pH 10), chromfreier Reiniger, enthaltend Tannine, um die Reinigung zu verbessern und die Ätzung herabzusetzen
Reiniger C: ein starkalkalischer (pH 12) chromhaltiger, nichtätzender Reiniger

Die Behandlungsfolge war bei den mit Reiniger A und Reiniger B gereinigten Ausschnitten die gleiche wie oben angegeben. Die mit Reiniger C gereinigten Proben wurden jedoch 2 Min. gereinigt anstelle von 45 Sek. Die anderen Stufen und Zeiten blieben die gleichen.

Nach der Behandlung wurde das Aussehen der Ausschnitte bewertet, und dann wurde eine Probe jeden Paares dem Haftungstest unterworfen. Die Ergebnisse sind in den Tabellen I B, IC und ID zusammengestellt:

Tabelle I B (Weißblech, Reiniger A und B)

| Emulsion Nr. | Reiniger | Aussehen | Haftungstest Außen | Haftungstest Innen |
|---|---|---|---|---|
| 1A | A | D9 (Blasen) | 0 | 0 |
| 1B | A | VF9 (Blasen) | 4 | 6 |
| 1C | A | VF9 (Blasen) | 10 | 10 |
| 1C | B | VF9 (Blasen | 10 | 10 |
| 1D | A | F9 (Blasen) | 2 | 9 |
| 1 E | A | VF9 (Blasen) | 5 | 10 |
| 1F | A | VF9 (Blasen) | 10 | 10 |
| 1F | B | VF9 (Blasen) | 10 | 10 |

Tabelle I C (Weißblech, Reiniger C)

| Emulsion Nr. | Aussehen | Haftungstest Außen | Haftungstest Innen |
|---|---|---|---|
| 1A | D9 (Blasen) | 10 | 9 |
| 1B | F9 (Blasen) | 10 | 10 |
| 1C | VF9 (Blasen) | 10 | 10 |
| 1D | VF9 (Blasen) | 10 | 10 |
| 1E | FM9 (Blasen) | 10 | 10 |
| 1F | VF9 (Blasen) | 10 | 10 |

(In der Bewertung des Aussehens bedeuten „10" keine Blasenbildung und „9" eine sehr geringe Größe der Blasen. Die Häufigkeit der Blasen ist durch Buchstaben angegeben, wobei VF sehr wenig, F wenig, FM wenig bis mittel, M mittel und D dicht bedeuten.)

Tabelle I D (Schwarzblech, Reiniger A)

| Emulsion Nr. | Aussehen | Haftungstest Außen | Haftungstest Innen |
|---|---|---|---|
| 1A | D9 (Blasen) | 0 | 0 |
| 1B | VF9 (Blasen) | 10 | 10 |
| 1C | Vf9 (Blasen) | 10 | 10 |
| 1D | F9 (Blasen) | 9 | 9 |
| 1E | F9 (Blasen) | 8 | 10 |
| 1F | M9 (Blasen) | 10 | 10 |

Mit Ausnahme der Formulierung 1 A sind die Ergebnisse generell annehmbar bis ausgezeichnet. Geringe Qualität für Formulierung 1 A ist auf überschüssige Katalysatorkonzentrationen (in der Form des Alipal EP-120) zurückzuführen, die eine gute Härtung beeinflussen.

Ähnliche Ergebnisse wurden erhalten, wenn das verwendete Epoxidharz (Epon 1001, Handelsprodukt der Shell Chemical Co.) zum Teil gegen ein Epoxidharz mit einem mittleren Molekulargewicht von 2900 und einem Hydroxyl-Äquivalent pro Mol von 11,6 (Handelsprodukt Epon 1007) ausgetauscht wurde und wenn butylierte oder gemischt methylierte-butylierte Melaminformaldehydharze anstelle des methylierten Harzes (Handelsprodukt Cymel 303) verwendet wurden.

## Beispiel 2

Eine weitere Reihe von Emulsionen wurde entsprechend den Angaben in Tab. II A hergestellt:

Tabelle II A

| Komponenten: Nr. | 2A | 2B | 2C |
|---|---|---|---|
| Epoxidharz 1) | 19,83 | 19,83 | 19,83 |
| Monomeres methyliertes Melamin-Formaldehydharz 2) | 3,73 | 3,73 | 3,73 |
| Blockpolymeres 3a) | 3.78 | 4.25 | -- |
| Blockpolymeres 3b)(mit Niedrigschäumer) | -- | -- | 3.55 |
| Saurer Katalysator 4) | 0.95 | 0.48 | 1.18 |
| Monoammoniumphosphat | 0.04 | 0.04 | 0.04 |
| Entionisiertes Wasser | Rest | Rest | Rest |

1) Handelsprodukt Epon 1001, siehe Tab. I A
2) Handelsprodukt Cymel 303, siehe Tab. I A
3a) Handelsprodukt Pluronic F 68, siehe Tab. I A
3b) Handelsprodukt Pluronic F 68 LF, wie 3a), jedoch eine Niedrigschaum-Komponente enthaltend.
4) Handelsprodukt Alipal EP-120, siehe Tab. I A

In ähnlicher Weise wie in Beispiel 1 wurden Schwarzblech-Ausschnitte (1 pro Variation) und Weißblech-Ausschnitte (2 pro Variation) durch diese Emulsionen behandelt unter Verwendung des Verfahrensganges: 45 Sek. Spritzen mit Reiniger A; 15 Sek. Spritzspülung Warmwasser; 15 Sek. Spritzspülung entionisiertes Wasser; 15 Sek. Tauchbehandlung Emulsion; 5 Min. Einbrennen bei 204 °C. Die Coupons wurden dem Haftungstest unterworfen. Die Ergebnisse sind in den Tabb. II B und II C gezeigt. Annehmbare bis ausgezeichnete Ergebnisse wurden mit den Emulsionen verzeichnet, die entweder das Blockpolymere ohne oder mit Niedrigschäumer (Handelsprodukte Pluronic F 68 bzw. F 68 LF) enthalten.

Tabelle II B (Weißblech, Reiniger A)

| Emulsion Nr. | Aussehen | Haftungstest Außen | Haftungstest Innen |
|---|---|---|---|
| 2A | FM 9 (Blasen) | 8 | 9 |
| 2B | VF9 (Blasen | 10 | 10 |
| 2C | 10 | 9 | 9 |

Tabelle II C (Schwarzblech, Reiniger A)

| Emulsion Nr. | Aussehen | Haftungstest Außen | Haftungstest Innen |
|---|---|---|---|
| 2A | FM9 (Blasen) | 8 | 9 |
| 2B | F9 (Blasen) | 8 | 10 |
| 2C | 10 | 6-7 | 9 |

Beispiel 3

Ein Emulsionskonzentrat wurde hergestellt, das die in Tab.III angegebenen Komponenten enthielt:

Tabelle III

| Komponenten | Gew.-% |
|---|---|
| Epoxidharzlösung [1)] | 14.81 |
| Monomeres methyliertes Melaminformaldehydharz [2)] | 2.78 |
| Blockpolymeres [3b)] (mit Niedrigschäumer) | 2.65 |
| Saurer Katalysator [4)] | 0.88 |
| Monoammoniumphosphat | 0.04 |
| Entionisiertes Wasser Gesamt | Rest |

1) siehe Tab. I A
2) siehe Tab. I A
3b) siehe Tab. II A
4) siehe Tab. I A

Eine 18.9 Liter-Labormaschine wurde verwendet, um eine gereinigte Dose im Fluten zu beschichten.

Zwölf gezogene und geglättete (drawn and ironed) Weißblechgetränkedosen (Größe 6.5 cm x 12.2 cm) wurden behandelt nach dem Verfahrensgang: 45 Sek. Spritzen mit Reiniger A; 15 Sek. Spritzspülung Warmwasser; 15 Sek. Spritzspülung entionisiertes Wasser; 10 Sek. Emulsionsbehandlung durch Fluten auf jeder der inneren und äußeren Dosenoberflächen; 30 Sek. Abtropfen; 3 Min. Ofen mit zirkulierender Luft bei einer Temperatur von 260 °C.

Acht der Dosen wurden Extraktionstests unterworfen gemäß den Arbeitsweisen, die in den FDA-Vorschriften unter 21 CFR 175.300, Teil (c) für Nahrungsmittel-Typen, identifiziert als I und IV beschrieben sind. Zusammengefaßt bestand der Extraktionstest darin, die mit dem Überzug versehenen Dosen 1 Min. im Spritzen mit heißem (87.8 °C) entionisierten Wasser (4.9 micro mho) zu spülen, die Dosen mit destilliertem Wasser bis innerhalb von 0.63 cm von oben zu füllen, jede Dose mit einem Stück Aluminiumfolie zu bedekken, die Dosen auf einem Gestell in einen 20 Liter-Druckbehälter, der eine geringe Menge destilliertes Wasser enthält, einzubringen und den Druckbehälter auf 1.05 $kg/cm^2$ (121 °C) zu erwärmen für zwei Stunden von der Zeit ab, wo der Druck 1.05 $kg/cm^2$ erreicht. Nach dem Abkühlen wurden die Wasserproben aus dem Doseninneren in reine Pyrexflaschen abgedampft und das Gewicht des Rückstandes, der das extrahierte Nichtflüchtige ausmacht, bestimmt. Das durchschnittliche Ergebnis in mg Extrahiertes/Dose betrug 3.06, welches 0.08 $mg/6.45\ cm^2$ oder einem „Extraktionsrückstand" von 8.08 ppm entspricht. Die nach den Vorschriften zugelassenen Werte sind 0.5 $mg/6.45\ cm^2$ bzw. 50 ppm ,

wenn der Überzug aus früher anerkannten Komponenten zusammengesetzt ist.

## Beispiel 4

36 Weißblechdosen (Größe 6.8 cm x 12.2 cm) wurden wie folgt behandelt (12 pro Emulsionsvariante): Vorwäsche verdünnte Seife; Spülen Warmwasser; 1 Min. Reiniger C; 20 Sek. Spritzspülung Warmwasser; 10 Sek. Spritzspülung entionisiertes Wasser; Überführung vom Dosengestell zu abgestumpftem Holzkonus; 10 bis 15 Sek. Emulsion 4A, 4B oder 4C; 5 Min. Härten bei 232 °C. Diese besonderen Dosen wurden in die Überzugsemulsionen so eingetaucht, daß nichts von dem Überzugsmaterial in den Innenteil der Behälter eingelassen wurde. Sechs weitere Dosen (2 pro Variation) wurden ähnlich behandelt, außer daß sie innen und außen beschichtet und 2,5 Min. bei 232 °C gehärtet wurden. Jede Dose war gereinigt, gespült und gewogen worden, so daß das Überzugsgewicht (mg/Dose) durch erneute Wägung des beschichteten Behälters bestimmt werden konnte. Die Zusammensetzung der jeweiligen Emulsionen ist in Tab. IV A angegeben.

### Tabelle IV A

| | | Konzentration - Teile pro 1000 | | |
|---|---|---|---|---|
| Komponenten | Nr. | 4A | 4B | 4C |
| Epoxidharzlösung [1] | | 124.9 | 89.2 | 95.6 |
| Monomeres methyliertes Melamin-Formaldehydharz [2] | | 20.8 | 22.3 | 15.9 |
| Blockpolymeres [3] | | 8.4 | 4.3 | 6.4 |
| Saurer Katalysator [4] | | 9.4 | 14.2 | 7.2 |
| Hydroxyäthylcellulose [5] | | -- | 1.0 | -- |
| Monoammoniumphosphat | | 0.03 | 0.04 | 0.04 |
| Benzoesäure | | 0.02 | 0.02 | 0.02 |
| Entionisiertes Wasser | | Rest | Rest | Rest |
| pH | | 5.8 | 5.4 | 4.8 |

0000796



1) siehe Tab. I A
2) siehe Tab. I A
3) siehe Tab. I A (Flocken)
4) siehe Tab. I A
5) Viskositätsmodifizierer (Handelsprodukt Natusol 250 HR der Hercules Inc.)

Das ermittelte durchschnittliche Schichtgewicht (innen und außen) (Mittel von 2 Bestimmungen) war: 4A: 155 mg/Dose; 4B: 140 mg/Dose; 4C: 110 mg/Dose.

35 von den 36 nur außen beschichteten Dosen wurden auf der Innenseite oben mit einem schwarzen Markierstift gekennzeichnet, so daß sie herausgesucht werden konnten aus der regulären Dosenproduktion. In einer Dosenfertigungsanlage wurden die Dosen eingesetzt in die Beförderungsvorrichtung oberhalb eines handelsmäßigen Druckers, wenn Zwischenraum oder geringe Verzögerungen eintraten, und so gut gemischt mit der regulären Produktion. Die Dosen wurden bedruckt mit einer Dreifarben-Bierdosenkennzeichnung (weiß, dunkelrot und blau) und überlackiert, gebrannt, erhielten 2 Innenlack- (Sanitärlack-) Überzüge von etwa 110 mg pro Durchgang und wurden gebrannt. Nach dem Schlußhärten wurden die Dosen von der regulären Produktion getrennt und aus der Linie entnommen. Alle 35 wurden zurückerhalten.

Alle Dosen waren in ausgezeichnetem Zustand mit keinen Verharzungen, Fehlstücken, Doppelbedruckungen usw. Verglichen zur Produktion (Weißblechdosen gereinigt mit einem Reiniger, ähnlich wie „C", getrocknet und dekoriert wie vorstehend), hatten die mit den Mitteln dieses Beispiels beschichteten Dosen ein besseres Aussehen (Weißdruck hatte mehr „Tiefe"), und es gab keine geschädigten Bereiche. Alle Formulierungen waren breit aufnahmefähig für übliche Dosendruckfarben und -techniken.

2 Dosen von jeder Gruppe und auch 2 von der regulären Produktion wurden dem früher beschriebenen Haftungstest unterworfen mit folgendem Ergebnis (nur außen):

| Behandlung | Bewertung |
|---|---|
| Kontrolle | 8, 8-9 |
| 4A | 8-9, 8-9 |
| 4B | 8-9, 8-9 |
| 4C | 9, 9 |

Die Haftung der Drucktinten auf den mit den Emulsionen dieses Beispiels beschichteten Dosen war ebensogut oder besser als die Kontrollen.

## Patentansprüche

1. Wäßriges Mittel zur Bildung eines Schutzüberzuges auf Metalloberflächen, dadurch gekennzeichnet, daß es

(a) ein Epoxidharz mit einem durchschnittlichen Molekulargewicht von etwa 900 bis 2 900 und etwa 2.7 bis 11.6 Hydroxyläquivalenten pro Mol,

(b) ein Melamin-Formaldehydharz, alkyliert mit mindestens einem Alkohol mit von 1 bis 4 C-Atomen in einem Gewichtsverhältnis von Epoxidharz : Melamin-Formaldehydharz von (2 bis 20) : 1,

(c) einen sauren Katalysator in einer ausreichenden Menge, um Vernetzung des Epoxidharzes und Melamin-Formaldehydharzes zu bewirken,

(d) ein Blockcopolymeres der allgemeinen Formel

$$HO(CH_2CH_2O)_a(\overset{CH_3}{\overset{|}{C}}HCH_2O)_b(CH_2CH_2O)_cH$$

mit einer HLB-Zahl über 22 und einem Molekulargewicht im Bereich von etwa 5 000 bis 14 000 in einer Menge von etwa 2 bis 12 Gew.-% der Summe von Epoxid- und Melamin-Formaldehydharz und

(e) Wasser

enthält, wobei die Summe der Konzentrationen der Komponenten (a), (b), (c) und (d) 5 bis 85 Gew.-% des wäßrigen Mittels beträgt.

2. Mittel nach Anspruch 1, <u>dadurch gekennzeichnet</u>, daß der saure Katalysator (c) ein Ammoniumsalz eines Anions der Formel

$$R\text{-}O(CH_2CH_2O)_mSO_3^-$$

ist, wobei R eine Alkyl- oder Alkylarylgruppe mit mindestens 10 C-Atomen ist und einen gesättigten Alkylanteil enthält und m im Bereich von etwa 4 bis 30 ist.

3. Mittel nach Anspruch 1 und 2, <u>dadurch gekennzeichnet</u>, daß das Blockcopolymere (d) eine HLB-Zahl von mindestens etwa 29 hat und der Wert von (b) etwa 30 und die Summe von (a) und (c) etwa 150 ist.

4. Mittel nach Anspruch 1 bis 3, <u>dadurch gekennzeichnet</u>, daß die Summe der Konzentrationen der Komponenten (a), (b), (c) und (d) nicht über 60 Gew.-%, vorzugsweise im Bereich von 12 bis 40 Gew.-%, liegt.

5. Mittel nach Anspruch 1 bis 4, <u>dadurch gekennzeichnet</u>, daß es einen pH-Wert von 4.5 bis 8.5 aufweist.

6. Mittel nach Anspruch 1 bis 5, <u>dadurch gekennzeichnet</u>, daß es zusätzlich ein Ammoniumsalz von Phosphorsäure in ausreichender Menge, um die Phasenstabilität des Mittels zu erhöhen, enthält.

7. Mittel nach Anspruch 1 bis 6, <u>dadurch gekennzeichnet</u>, daß es zusätzlich Benzoesäure oder ein Salz hiervon in ausreichender Menge, um ein Anrosten der Metalloberfläche beim Trocknen zu verhindern, enthält.

8. Verfahren zur Beschichtung einer Stahl- oder Zinnoberfläche, dadurch gekennzeichnet, daß die Oberflächen mit einem Mittel nach Anspruch 1 bis 7 in Berührung gebracht werden und danach der aufgebrachte Überzug wärmegehärtet wird.

Europäisches Patentamt

# EUROPÄISCHER RECHERCHENBERICHT

EP 78 20 0111

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| A | NL - A - 69 08546 (AMERCOAT)<br>* Patentansprüche 1,2 und 7 *<br>-- | 1 | C 08 L 63/00<br>C 09 D 3/58 |
| A | FR - A - 2 315 526 (CIBA)<br>* Patentansprüche 1, 15 und 16 *<br>---- | 1 | |
| | | | RECHERCHIERTE SACHGEBIETE (Int. Cl.²) |
| | | | C 09 D 3/58<br>C 08 L 63/00 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Den Haag | 26-09-1978 | DECOCKER |

EPA form 1503.1 06.78